# EUROPEAN PATENT APPLICATION

(11) **EP 4 600 430 A1**
(43) Date of publication of application: **13.08.2025**
(21) Application number: 23874843.8
(22) Date of filing: 03.10.2023
(51) Int. Cl.: E02F 9/20, E02F 9/24

(54) **WORKING MACHINE**

(30) Priority: 03.10.2022 JP 2022159477
(71) Applicant: Hitachi Construction Machinery Co., Ltd., Tokyo 110-0015 (JP)
(72) Inventor: TSUCHIE Yoshiyuki, Tsuchiura-shi, Ibaraki 300-0013 (JP); SAKAMOTO Hiroshi, Tsuchiura-shi, Ibaraki 300-0013 (JP)
(74) Representative: MERH-IP Matias Erny Reichl Hoffmann Patentanwälte PartG mbB
(86) International application number: PCT/JP2023/036027
(87) International publication number: WO 2024/075716

(57) **Abstract**

Provided is a working machine that allows suppressing the working machine from operating based on a control command generated based on a misrecognition of a specification of the working machine in the working machine including an external control interface that receives the control command for the working machine from outside and outputs working machine information necessary for generating the control commands to the outside. In order to secure confirmation of the specification of the working machine 1 before the external control of the working machine 1 is started, the external input/output information of the external control interface 101 is monitored, and operation of the working machine 1 is restricted until the external input/output information includes information that identifies the specification of the working machine 1.

## Description

### Technical Field

The present invention relates to a working machine.

### Background Art

In recent years, against the backdrop of a shortage of manpower in civil engineering and construction industries, there has been a growing focus on remote and automatic control of working machines. In order to realize the remote and automatic control of the working machines, rather than directly modifying the working machines, there is a method of opening up actuator control functions of the working machines as an Application Programming Interface (API). In other words, this is a method that realizes the remote or automatic control system by providing the working machine with an interface (an external control interface) that controls the working machine in accordance with external control commands in advance and building an external control device that generates remote or automatic control commands in accordance with a work site, work content, or the like, and connecting it to the working machine.

A conventional technology for the automatic control system is found in JP 2020-125594 A (Patent Literature 1).

Patent Literature 1 describes "a control system for a construction machine including working equipment includes an arm and a bucket removable from the arm. The control system includes: a target value generation unit configured to generate a target value of an amount of control of the working equipment; a prediction model storage unit configured to store a prediction model for the working equipment; a weight data acquisition unit configured to acquire weight data of the bucket; a prediction model update unit configured to update the prediction model based on the weight data; a prediction unit configured to calculate a predicted value of the amount of control of the working equipment based on the target value and the prediction model, and calculate an amount of drive to control the working equipment based on the predicted value; and a command unit configured to output a control command to control the working equipment based on the amount of drive." Here, as for how to acquire weight data, it is described that "the driver or the manager of an excavator 100 is allowed to operate an input device 80 to input the weight data of a bucket 8 to a control device 50" as an embodiment.

In addition, in the case of a use case where an external control device is mounted on an unidentified machine, there is another conventional technology, JP 6604925 B (Patent Literature 2), which describes means of acquiring information about the mechanical specifications of the machine where the external control device is mounted, such as weight data.

Patent Literature 2 describes that "a safe operation assistance device in which the unique information includes information for identifying a vehicle type of the own vehicle, and the possibility determination section determines whether a possibility of collision exists based on the positional information and information for identifying the vehicle type of the own vehicle and the positional information and information for identifying the vehicle type of the other vehicle acquired through the inter-vehicle communication section."

Here, as for how to acquire unique information, "the safe operation assistance device in which when the connection detection section detects a traffic control terminal that manages the unique information of the self-vehicle as the destination device, the unique information setting section sets the information transmitted from the traffic control terminal as the unique information," and "the safe operation assistance device in which when the connection detection section does not detect the traffic control terminal that manages the unique information of the self-vehicle as the destination device, the unique information setting section sets a value predetermined in advance as the unique information."

### Citation List

### Patent Literature

Patent Literature 1: JP 2020-125594 A
Patent Literature 2: JP 6604925 B

### Summary of Invention

### Technical Problem

When the working machine with the external control interface is used for high accuracy machine control, there may be cases where a divergence between the actual mechanical specification and the mechanical specification recognized by the external control device is not acceptable. For example, Patent Literature 1 discloses a mechanism for maintaining control accuracy by inputting a bucket weight when a bucket is replaced. However, when the bucket weight is input incorrectly due to human error or other factors, there is a possibility of a significant deterioration in the control accuracy.

In addition, as a mechanism of automatically recognizing the mechanical specification, there is means for using the machine management system, as described in Patent Literature 2. However, there is a possibility that the mechanical specification update on the management system side may temporarily be delayed when the mechanical specification is changed during operation, such as when the bucket is changed. In this case, there is a case where a temporary misrecognition of the mechanical specification is not acceptable for the high accuracy machine control and the like, as illustrated in Patent Literature 1.

The present invention was made in consideration of the above-described problems, and an objective thereof is to provide the working machine that allows suppressing the external control device from misrecognizing the specification of the working machine in the working machine including the external control interface.

### Solution to Problem

To solve the above-described problem, a working machine of the present invention includes an external control interface, a control device, a working machine information holding device, and a monitoring device. The external control interface receives control command for remotely or automatically controlling the working machine from outside and outputs working machine information necessary for generating the control command outside. The control device controls the working machine in accordance with the control command. The working machine information holding device holds the working machine information. The monitoring device monitors external input/output information of the external control interface. The monitoring device includes an identification information determination section and an operational restriction command section. The identification information determination section determines whether or not identification information for identifying a specification of the working machine is included in the external input/output information. The operational restriction command section that generates an operational restriction command that restricts an operation of the working machine until the identification information determination section determines that the identification information is included in the external input/output information. The control device restricts the operation of the working machine in accordance with the operational restriction command generated by the operational restriction command section.

### Advantageous Effects of Invention

According to the present invention, in the working machine including the external control interface, it is possible to suppress the external control device from misrecognizing the specification of the working machine.

Problems, configurations, and effects other than those described above are clarified by the following description of the embodiment.

### Brief Description of Drawings

Fig. 1 is a side view of a working machine (an excavator) of Embodiments 1 to 3 of the embodiment.
Fig. 2 is a system block diagram of the working machine of Embodiment 1.
Fig. 3 is a flowchart of a monitoring device of Embodiment 1.
Fig. 4 is a system block diagram of a working machine of Embodiment 2.
Fig. 5 is a flowchart of a monitoring device of Embodiment 2.
Fig. 6 is a flowchart of a monitoring device of Embodiment 3.

### Description of Embodiments

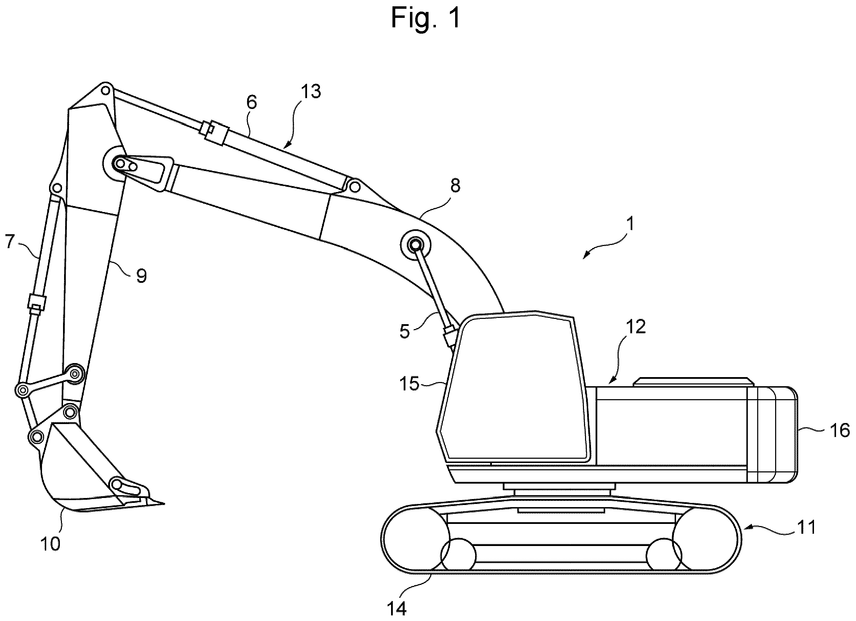

The following describes embodiments of the present invention using drawings. The embodiments described below are for working machines such as an excavator illustrated in Fig. 1 allowed to be controlled externally. The working machines of the present invention are not limited to the excavator, and are also possible for use with a wide range of working machines, such as bulldozers, wheel loaders, compacting machines, trucks, cranes, and the like.

### [Embodiment 1]

Fig. 1 is a side view of a working machine (an excavator) 1 of the embodiments. As illustrated in Fig. 1, the working machine (the excavator) 1 includes a crawler-type lower traveling body 11, an upper swing body 12 swingably provided on the lower traveling body 11, and a multi-jointed working implement (a front working implement) 13 attached to the upper swing body 12.

The lower traveling body 11 travels by driving left and right track chains 14 with left and right traveling motors (not illustrated), respectively.

The upper swing body 12 includes a cab 15 in which an operator boards on one side of left and right at front thereof. A swing motor (not illustrated) is attached to a swing frame of the upper swing body 12. When the swing motor is driven, the upper swing body 12 rotates with respect to the lower traveling body 11. A counterweight 16 is provided on a rear of the upper swing body 12 to maintain balance of weight of a machine.

A working implement 13 is connected to a side of the cab 15 at the front of the upper swing body 12. The working implement 13 is a multi-jointed front working implement including a boom 8, an arm 9, and an attachment 10 (a bucket in this embodiment). The boom 8 is directly connected to the upper swing body 12 turnably up and down, and is also connected to the upper swing body 12 via a boom cylinder 5. The arm 9 is directly connected to a tip of the boom 8 turnably, and is also connected to the boom 8 via an arm cylinder 6. The attachment (the bucket) 10 is directly connected to a tip of the arm 9 turnably, and is also connected to the arm 9 via an attachment cylinder 7. The boom cylinder 5, the arm cylinder 6, and the attachment cylinder 7 are hydraulic actuators. When the swing motor is driven, the upper swing body 12 swings. When the boom cylinder 5, the arm cylinder 6, and the attachment cylinder 7 are driven, the boom 8, the arm 9, and the attachment 10 turn, respectively, and a position and a posture of the attachment 10 change. This allows performing a work such as excavating. In addition, the attachment (the bucket) 10 in this embodiment is possible to be replaced with another attachment such as a breaker or a slope bucket.

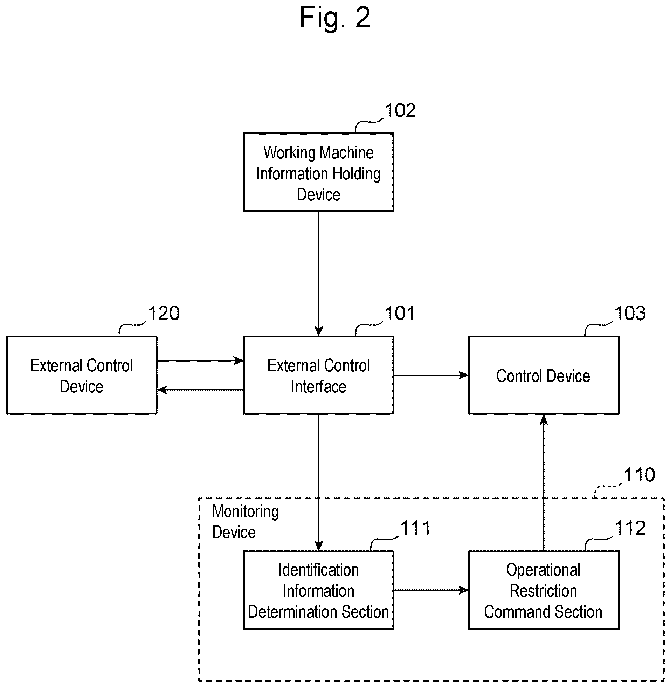

Fig. 2 is a system block diagram of the working machine 1 of Embodiment 1. First, a premise of Embodiment 1 will be described.

An external control interface 101 is a connection interface with an external control device 120, and relays control commands (control commands for remotely or automatically controlling the working machine 1) received from the external control device 120 to a control device 103, while also pulling out information on the working machine 1 (working machine information) requested by the external control device 120 from a working machine information holding device 102 and outputting it to the external control device 120.

The working machine information holding device 102 holds all the information related to the working machine 1 and outputs the information required by the external control interface 101.

The control device 103 controls: the working implement 13, which includes the boom 8, the arm 9, and the attachment (the bucket) 10; the upper swing body 12; and the lower traveling body 11 in accordance with the control commands of the external control interface 101.

The external control device 120 generates control commands for the working machine 1 based on the working machine information acquired from the external control interface 101, and outputs the generated control commands to the external control interface 101. The external control device 120 is an in-vehicle or non-in-vehicle electronic device that is developed by, not a working machine manufacturer, but the user of the working machine and is connected to the working machine. When the external control device 120 is the in-vehicle device, it is connected to the external control interface 101 by wired connection. When the external control device 120 is the non-in-vehicle electronic device, it is connected to the external control interface 101 by wireless connection.

Next, a part related to the present invention in Embodiment 1 will be described. In Embodiment 1, after the external control device 120 establishes communication with the external control interface 101, a monitoring device 110 restricts operation of the working machine 1 until the external control device 120 completes confirmation of specifications of the working machine 1.

The monitoring device 110 is a device that monitors external input/output information of the external control interface 101. The external input/output information includes external input information input from the outside and external output information output to the outside. The monitoring device 110 includes an identification information determination section 111 and an operational restriction command section 112.

The identification information determination section 111 is a block that determines whether or not information (identification information) for identifying the specifications of the working machine 1 is included in the external input/output information of the external control interface 101. In more detail, the identification information determination section 111 determines whether or not the external output information output to the external control device 120 includes identification information for the mechanical specifications, and whether or not the external input information input from the external control device 120 includes a receipt response (an acquisition response) for the identification information.

The operational restriction command section 112 is a block that issues commands to the control device 103 to restrict or release restrictions on the machine operation based on the determination results of the identification information determination section 111. In more detail, the operational restriction command section 112 generates an operational restriction command that restricts the operation of the working machine 1 (operation prohibition or operating speed restriction) and outputs it to the control device 103 when the identification information determination section 111 determines that the identification information for the mechanical specifications is not included in the external input/output information of the external control interface 101 (in other words, the identification information for the mechanical specifications is not included in the external output information, or the receipt response of the identification information is not included in the external input information). On the other hand, the operational restriction command section 112 generates an operational-restriction releasing command that releases the operational restriction on the working machine 1 and outputs it to the control device 103 when the identification information determination section 111 determines that the identification information for the mechanical specifications is included in the external input/output information of the external control interface 101 (in other words, when the identification information for the mechanical specifications is included in the external output information and the receipt response for the identification information is included in the external input information. In other words, the operational restriction command section 112 generates the operational restriction command that restricts the operation of the working machine 1 until the identification information determination section 111 determines that the identification information for the mechanical specifications is included in the external input/output information of the external control interface 101, and outputs it to the control device 103.

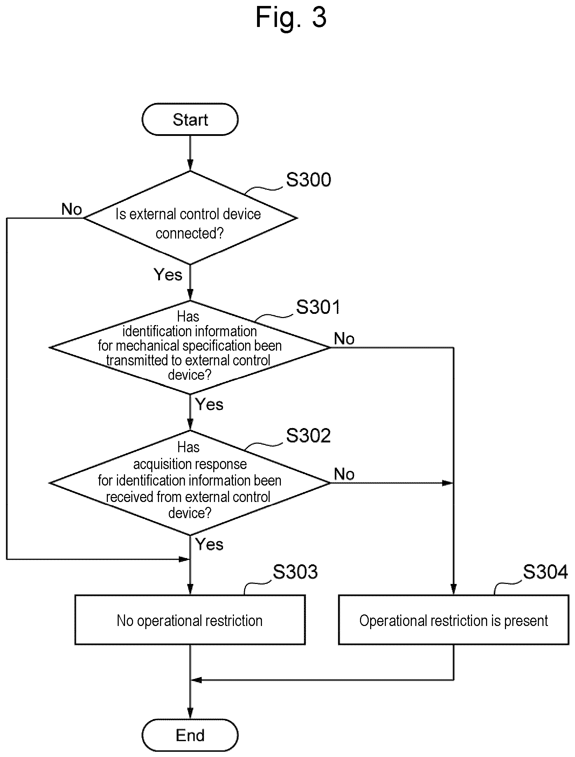

The processing of the monitoring device 110 in Embodiment 1 is illustrated in a flowchart in Fig. 3. The following is a description of Embodiment 1, following the flowchart.

Step S300 is a step of determining whether or not the external control interface 101 is connected to the external control device 120. When the external control device 120 is not connected, the working machine 1 does not operate by the external control device 120. Thus, the operational restriction is released (Step S303). When the external control device 120 is connected, the processing proceeds to Step S301. This step is executed by the identification information determination section 111.

Step S301 is a step of determining whether or not the external control interface 101 has transmitted the information (the identification information) for identifying the mechanical specifications held in the working machine information holding device 102 to the external control device 120 in accordance with a request from the external control device 120. Here, the information for identifying the mechanical specifications refers to a type of the working machine (for example, an excavator), types of parts constituting the working machine (for example, an attachment, an arm, a boom, an upper swing body, a lower traveling body, and the like), a vehicle class, an unique number for identifying the machine (for example, a serial number), a model of the working machine, a weight and dimensions of each of the attachment, the arm, the boom, the upper swing body, and the lower traveling body, working machine control properties (responsiveness, control accuracy), a list of functions implemented on the working machine, such as semi-automatic control functions, a version of implemented functions, and a date and time of the last update of mechanical specification information (an update history).

In this step, when it is determined that the identification information for the mechanical specifications has not been transmitted to the external control device 120, the operation of the working machine 1 is prohibited in order to suppress misuse of the working machine 1 by the external control commands (Step S304). When it is determined that the identification information for the mechanical specifications has been transmitted to the external control device 120, the processing proceeds to Step S302. This step is executed by the identification information determination section 111.

Step S302 is a step of determining whether or not the external control device 120 has responded to the receipt of the mechanical specifications via the external control interface 101. In other words, this is a step of determining whether or not the external control interface 101 has received the acquisition response indicating that the mechanical specifications have been received from the external control device 120. This step is intended to handle cases where the external control device 120 is unable to confirm the mechanical specifications due to a temporary communication error or another problem. When there is no receipt response (an acquisition response) from the external control device 120 in response to the identification information for the mechanical specifications transmitted by the external control interface 101, the operation of the working machine 1 is prohibited (Step S304). When there is the receipt response (the acquisition response) from the external control device 120, the processing proceeds to Step S303. This step is executed in the identification information determination section 111.

Step S303 is a step of commanding the control device 103 to release the restriction on the machine operation in response to the determination results of Steps S300 and S302. In other words, when the external control device 120 is not connected, or when the identification information for the mechanical specification has already been transmitted to the external control device 120 (in other words, the identification information for the mechanical specification is included in the external output information output to the external control device 120), and there is the receipt response (the acquisition response) from the external control device 120 (in other words, the receipt response of the identification information is included in the external input information input from the external control device 120), then the operational-restriction releasing command is generated and output to the control device 103. This step is executed in the operational restriction command section 112.

Step S304 is a step of commanding the control device 103 to prohibit (restrict) the machine operation in response to the determination results of Steps S301 and S302. In other words, when the identification information for the mechanical specifications has not been transmitted to the external control device 120 (in other words, the identification information for the mechanical specifications is not included in the external output information output to the external control device 120) or there is no receipt response (the acquisition response) from the external control device 120 (in other words, the receipt response for the identification information is not included in the external input information input from the external control device 120), an operational restriction command is generated and output to the control device 103. This step is performed by the operational restriction command section 112.

The control device 103 restricts the operation of the working machine 1 (the operation prohibition or the operating speed restriction) in accordance with the relevant operational restriction command while the operational restriction command is being input from the operational restriction command section 112. On the other hand, the control device 103 releases the operational restriction on the working machine 1 in accordance with the relevant operational-restriction releasing command or does not perform the operational restriction while the operational-restriction releasing command is input from the operational restriction command section 112.

As described above, the working machine 1 of Embodiment 1 includes: the external control interface 101 that receives control command for remotely or automatically controlling the working machine 1 from outside (the external control device 120) and outputs working machine information necessary for generating the control command outside; the control device 103 that controls the working machine 1 in accordance with the control command; the working machine information holding device 102 that holds the working machine information; and the monitoring device 110 that monitors the external input/output information of the external control interface 101. The monitoring device 110 includes the identification information determination section 111 that determines whether or not the identification information for identifying the specification of the working machine is included in the external input/output information and the operational restriction command section 112 that generates the operational restriction command that restricts the operation of the working machine 1 until the identification information determination section 111 determines that the identification information is included in the external input/output information, and the control device 103 restricts the operation of the working machine 1 in accordance with the operational restriction command generated by the operational restriction command section 112.

In the above-described processing, in Embodiment 1, the operation of the working machine 1 by the external control device 120 is prohibited or the operating speed of the working machine 1 is restricted until the mechanical specifications are notified to the external control device 120 by the external control interface 101. This suppresses the external control device 120 from controlling the working machine 1 while misrecognizing the specifications of the working machine 1.

### [Embodiment 2]

Embodiment 2 is an embodiment of a case where the specifications are queried from an external control device to a working machine.

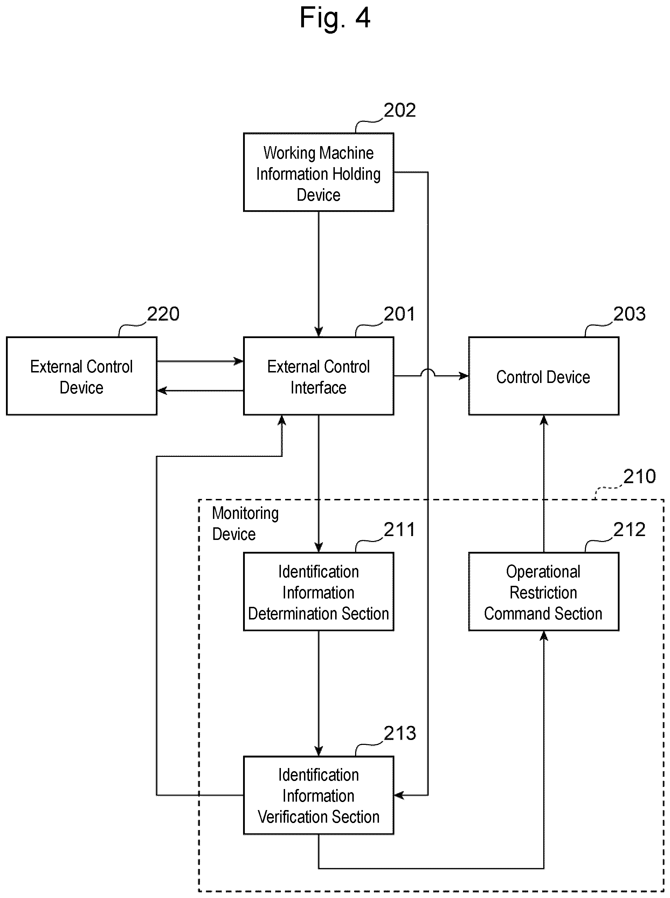

Fig. 4 is a system block diagram of a working machine 1 in Embodiment 2. The description is omitted because the premise of Embodiment 2 is the same as that of Embodiment 1.

Next, a part related to the present invention in Embodiment 2 will be described. In Embodiment 2, it is described that after an external control device 220 establishes communication with an external control interface 201, the processing by a monitoring device 210 restricts the operation of the working machine 1 until the external control device 220 completes the confirmation of the specifications of the working machine 1.

The monitoring device 210 is a device that monitors the external input/output information of the external control interface 201. The external input/output information includes the external input information input from the outside and the external output information output to the outside. The monitoring device 210 includes an identification information determination section 211, an operational restriction command section 212, and an identification information verification section 213.

The identification information determination section 211 is a block that determines whether or not the information (the identification information) for identifying the specifications of the working machine 1 is included in the external input information input from the external control device 220 in the external input/output information of the external control interface 201. In other words, it is the block that determines whether or not the external control interface 201 has received the information (the identification information) for identifying the mechanical specifications from the external control device 220.

The identification information verification section 213 is a block that determines whether or not the identification information included in the external input information input from the external control device 220 matches the information held in a working machine information holding device 202.

The operational restriction command section 212 is a block that commands a control device 203 to restrict or release the restriction on the machine operation based on the determination result of the identification information verification section 213. In more detail, when the identification information verification section 213 determines that the identification information included in the external input information does not match the information held in the working machine information holding device 202, the operational restriction command section 212 generates an operational restriction command that restricts the operation of the working machine 1 (the operation prohibition or the operating speed restriction) and outputs it to the control device 203. On the other hand, when the identification information verification section 213 determines that the identification information included in the external input information matches the information held in the working machine information holding device 202, the operational restriction command section 212 generates the operational-restriction releasing command to release the operational restriction on the working machine 1 and outputs it to the control device 203. In other words, the operational restriction command section 212 generates the operational restriction command to restrict the operation of the working machine 1 and outputs it to the control device 203 until the identification information verification section 213 determines that the identification information included in the external input information matches the information held in the working machine information holding device 202.

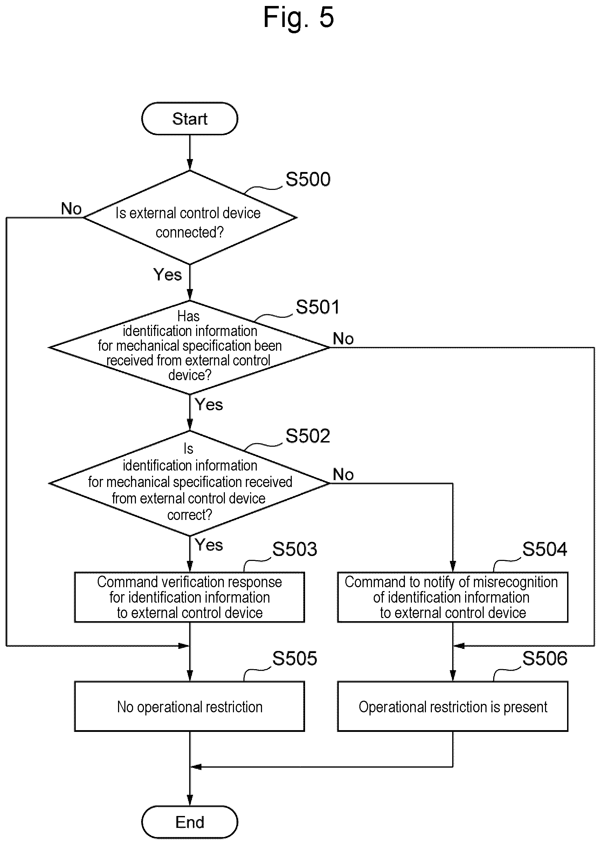

The processing of the monitoring device 210 in Embodiment 2 is illustrated in the flowchart in Fig. 5. The following is a description of Embodiment 2, following this flowchart.

Step S500 is a step of determining whether or not the external control interface 201 is connected to the external control device 220. When the external control device 220 is not connected, the working machine 1 does not operate by the external control device 220. Thus, the operational restriction is released (Step S505). When the external control device 220 is connected, the processing proceeds to Step S501. This step is executed by the identification information determination section 211.

Step S501 is a step of determining whether or not the external control interface 201 has received the information (the identification information) for identifying the mechanical specifications from the external control device 220. The identification information for the mechanical specifications is the same as in Embodiment 1. When it is determined in this step that the identification information has not been received, the confirmation of the mechanical specifications by the external control device 220 is incomplete, and thus the machine operation is restricted (Step S506). When it is determined that the identification information has been received, the processing proceeds to Step S502. This step is executed by the identification information determination section 211.

Step S502 is a step of determining whether or not the identification information for the mechanical specifications received by the external control interface 201 matches the identification information for the mechanical specifications held by the working machine information holding device 202. When the identification information for the mechanical specifications transmitted by the external control device 220 is determined to be a mismatch with the identification information for the mechanical specifications held by the working machine information holding device 202, it is determined that the external control device 220 is misrecognizing the mechanical specifications, and the misrecognition of the mechanical specifications and the correct mechanical specifications are notified to the external control device 220 via the external control interface 201 (Step S504). On the other hand, when the identification information for the mechanical specifications transmitted by the external control device 220 matches the identification information for the mechanical specifications held by the working machine information holding device 202, a verification response for the identification information is notified to the external control device 220 via the external control interface 201 (Step S503). This step is executed by the identification information verification section 213.

Step S503 is a step of commanding the external control interface 201 to notify the external control device 220 of the verification response of the identification information. This step is executed by the identification information verification section 213.

Step S504 is a step of commanding the external control interface 201 to notify the external control device 220 of the misrecognition of the mechanical specifications and the correct mechanical specifications. This step is executed by the identification information verification section 213.

Step S505 is a step of commanding the control device 203 to release the restriction on the machine operation when it is determined that the working machine 1 is not controlled by the external control device 220 (No in Step S500) or when it is determined that the external control device 220 correctly recognizes the mechanical specifications (Yes in Step S502). In other words, the operational-restriction releasing command is generated and output to the control device 203. This step is executed by the operational restriction command section 212.

Step S506 is a step of commanding the control device 203 for the restriction on the machine operation when the external control device 220 has determined that the specifications of the working machine are unconfirmed or misrecognized (No in Steps S501 and S502). In other words, the operational restriction command is generated and output to the control device 203. This step is executed in the operational restriction command section 212.

The control device 203 restricts the operation of the working machine 1 (the operation prohibition or the operating speed restriction) in accordance with the relevant operational restriction command while the operational restriction command is input from the operational restriction command section 212. On the other hand, the control device 203 releases the operational restriction on the working machine 1 in accordance with the relevant operational-restriction releasing command or does not perform the operational restriction while the operational-restriction releasing command is input from the operational restriction command section 212.

As described above, in the monitoring device 210 of the working machine 1 of Embodiment 2, the identification information determination section 211 determines whether or not the identification information is included in the external input information received from the outside (the external control device 220) in the external input/output information of the external control interface 201, and the monitoring device 210 includes the identification information verification section 213 that determines whether or not the identification information matches the working machine information held in the working machine information holding device 202 when the identification information is determined to be included in the external input information, and the operational restriction command section 212 generates and outputs the operational restriction command to the control device 203 until the identification information verification section 213 determines that the identification information included in the external input information matches the working machine information held in the working machine information holding device 202.

In the above-described processing, in Embodiment 2, the operation of the working machine 1 by the external control device 220 is prohibited or the operating speed of the working machine 1 is restricted until the mechanical specifications recognized by the external control device 220 are confirmed to be correct. This suppresses the external control device 220 from controlling the working machine 1 while misrecognizing the specifications of the working machine 1.

### [Embodiment 3]

Embodiment 3 is an embodiment in which the operational restriction is changed in accordance with a status of information exchange in the identification information.

The system block diagram of the working machine 1 in Embodiment 3 is the same as that of embodiment 2. The description of the premise of Embodiment 3 is omitted because it is the same as that of embodiment 2.

Next, a part related to the present invention in Embodiment 3 will be described. In Embodiment 3, it is described that the processing by the monitoring device 210 releases the operational restrictions on the working machine 1 piece by piece until the external control device 220 completes the confirmation of the specifications of the working machine 1.

Since the identification information determination section 211 and the identification information verification section 213 of the monitoring device 210 are the same as in Embodiment 2, the description is omitted.

The operational restriction command section 212 is a block that changes the content of the restriction on the machine operation to command the control device 203 in accordance with the determination result of the identification information verification section 213. In more detail, when there is a part for which the identification information verification section 213 determines that the identification information included in the external input information does not match the information held in the working machine information holding device 202, the operational restriction command section 212 generates the operational restriction command (the operation prohibition or the operating speed restriction) for the part having been determined not to match, and outputs it to the control device 203. On the other hand, when there is a part for which the identification information verification section 213 determines that the identification information included in the external input information matches the information held in the working machine information holding device 202, the operational restriction command section 212 generates the operational-restriction releasing command to release the operational restriction on the part having been determined to match, and outputs it to the control device 203. This releases the operational restrictions on the working machine 1 piece by piece.

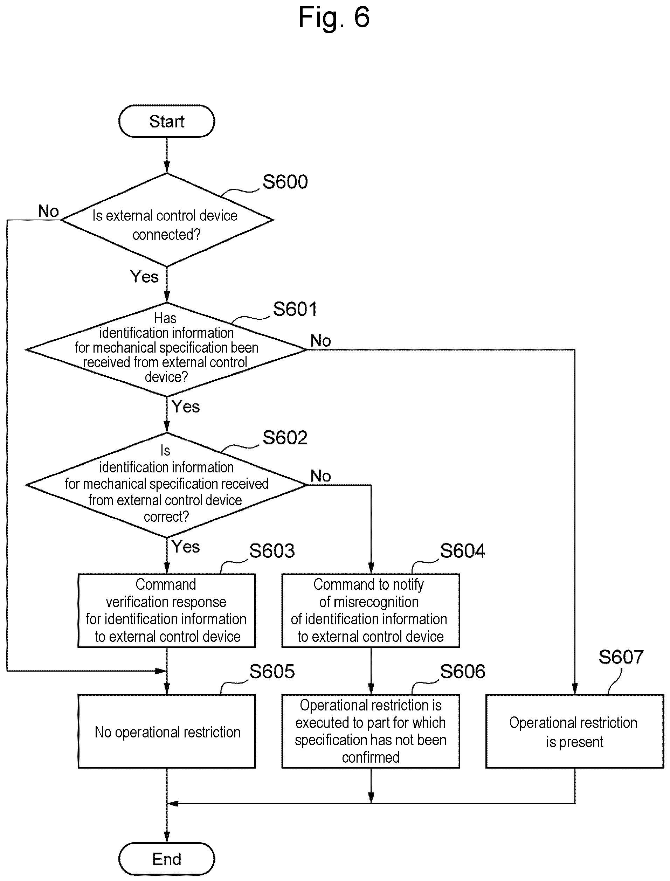

The processing of the monitoring device 210 in Embodiment 3 is illustrated in the flowchart in Fig. 6. The following is a description of Embodiment 3, following this flowchart.

The description of Step S600 is omitted because it is the same as Embodiment 2.

Step S601 is a step of determining whether or not the external control interface 201 has received the information (the identification information) for identifying the mechanical specifications from the external control device 220. Here, the identification information for the mechanical specifications is the same as in Embodiment 1. When it is determined in this step that the identification information has not been received, the confirmation of the mechanical specifications by the external control device 220 is incomplete, and thus the machine operation is prohibited (Step S607). When it is determined that the identification information has been received, the processing proceeds to Step S602. This step is executed in the identification information determination section 211.

Step S602 is a step of determining whether or not the identification information for the mechanical specifications received by the external control interface 201 matches the identification information for the mechanical specifications held by the working machine information holding device 202. When the identification information for the mechanical specifications transmitted by the external control device 220 is determined to be a mismatch with the identification information for the mechanical specifications held by the working machine information holding device 202, it is determined that the external control device 220 is misrecognizing the mechanical specifications, and the misrecognition of the mechanical specifications and the correct mechanical specifications are notified to the external control device 220 via the external control interface 201 (Step S604). On the other hand, when the identification information for the mechanical specifications transmitted by the external control device 220 matches the identification information for the mechanical specifications held by the working machine information holding device 202, the verification response for the identification information is notified to the external control device 220 via the external control interface 201 (Step S603). This step is executed by the identification information verification section 213.

Since Steps S603, S604, and S605 are the same as in Embodiment 2, the description is omitted.

Step S606 is a step of commanding the control device 203 for the restriction on the machine operation related to the part when the external control device 220 determines that the specifications of the part of the working machine have not been confirmed or have been misrecognized (No in Step S602). In other words, the operational restriction command related to the part where the identification information for the mechanical specifications transmitted by the external control device 220 is determined not to be the same as the identification information for the mechanical specifications held by the working machine information holding device 202 (the specifications have not been confirmed or have been misrecognized) is generated and output to the control device 203. Specifically, when the specifications related to the dimensions of the lower traveling body have not been confirmed, the traveling speed is restricted. In addition, when the specifications related to the dimensions of an upper traveling body have not been confirmed, the swing speed is restricted. This step is executed in the operational restriction command section 212.

Step S607 is a step of commanding the control device 203 to prohibit (restrict) the machine operation, depending on the determination result of Step S601. In other words, when it is determined that the identification information has not been received, the operational restriction command is generated and output to the control device 203. This step is executed in the operational restriction command section 212.

As described above, in the monitoring device 210 of the working machine 1 of Embodiment 3, the identification information determination section 211 determines whether or not the identification information is included in the external input information received from the outside (the external control device 220) in the external input/output information of the external control interface 201, the monitoring device 210 includes the identification information verification section 213 that determines whether or not the identification information matches the working machine information held in the working machine information holding device 202 when the identification information is determined to be included in the external input information and the operational restriction command section 212 changes a command content of the operational restriction command in accordance with the determination result of the identification information verification section 213, and outputs it to the control device 203. The operational restriction command section 212 changes the command content of the operational restriction command for each component constituting the working machine 1 in accordance with the determination result of the identification information verification section 213, and outputs it to the control device 203.

The above-described operational restriction command section 212 generates the operational restriction command related to the part for which the above-described identification information verification section 213 has determined that the identification information included in the external input information does not match the working machine information held in the working machine information holding device 202, and outputs it to the control device 203.

In the above-described processing, in Embodiment 3, the operation of the working machine 1 by the external control device 220 is prohibited or the operating speed of the working machine 1 is restricted until the mechanical specifications recognized by the external control device 220 are confirmed to be correct. On the other hand, even when there is a discrepancy in some specifications, the availability is improved by making it possible to operate while restricting the operating speed.

The present invention is not limited to the above-described embodiments, and includes various modifications. For example, the above-described embodiments are detailed descriptions of the present invention to make it easier to understand, and are not necessarily limited to those that have all the described configurations. It is also possible to replace some of a configuration of one embodiment with a configuration of another embodiment, and it is also possible to add a configuration of one embodiment to a configuration of another embodiment. It is also possible to add, delete, or replace some of the configurations of each embodiment with other configurations.

In addition, each of the functions of the controller in the above-described embodiment may be implemented in hardware by designing some or all of them, for example, in an integrated circuit. Alternatively, the functions may be implemented in software by having the processor interpret and execute programs that realize each function. The information for the programs, tables, files, and the like that realize each function can be stored in the memory device in the controller, as well as in recording devices such as hard disks and Solid State Drives (SSDs), or in recording media such as IC cards, SD cards, and DVDs.

### Reference Signs List

1 Working machine
101, 201 External control interface
102, 202 Working machine information holding device
103, 203 Control device
110, 210 Monitoring device
111, 211 Identification information determination section
112, 212 Operational restriction command section
213 Identification information verification section

## Claims

1. A working machine comprising:
an external control interface that receives control command for remotely or automatically controlling the working machine from outside and outputs working machine information necessary for generating the control command outside,
a control device that controls the working machine in accordance with the control command;
a working machine information holding device that holds the working machine information; and
a monitoring device that monitors external input/output information of the external control interface,
wherein the monitoring device includes:
an identification information determination section that determines whether or not identification information for identifying a specification of the working machine is included in the external input/output information; and
an operational restriction command section that generates an operational restriction command that restricts an operation of the working machine until the identification information determination section determines that the identification information is included in the external input/output information,
wherein the control device restricts the operation of the working machine in accordance with the operational restriction command generated by the operational restriction command section.

2. The working machine according to claim 1,
wherein the identification information determination section determines whether or not the identification information is included in the external input information received from the outside in the external input/output information of the external control interface,
wherein the monitoring device comprises an identification information verification section that determines whether or not the identification information matches the working machine information held in the working machine information holding device when the identification information is determined to be included in the external input information, and
wherein the operational restriction command section generates and outputs the operational restriction command to the control device until the identification information verification section determines that the identification information included in the external input information matches the working machine information held in the working machine information holding device.

3. The working machine according to claim 1,
wherein the identification information determination section determines whether or not the identification information is included in the external input information received from the outside in the external input/output information of the external control interface,
wherein the monitoring device comprises an identification information verification section that determines whether or not the identification information matches the working machine information held in the working machine information holding device when the identification information is determined to be included in the external input information, and
wherein the operational restriction command section changes a command content of the operational restriction command in accordance with the determination result of the identification information verification section, and outputs the operational restriction command to the control device.

4. The working machine according to claim 3,
wherein the operational restriction command section changes the command content of the operational restriction command for each component constituting the working machine in accordance with the determination result of the identification information verification section, and outputs the operational restriction command to the control device.

5. The working machine according to claim 3,
wherein the operational restriction command section generates the operational restriction command related to a part for which the identification information verification section has determined that the identification information included in the external input information does not match the working machine information held in the working machine information holding device, and outputs the operational restriction command to the control device.

6. The working machine according to claim 1,
wherein the identification information determination section determines that the external input/output information includes the identification information when the external output information output to outside includes the identification information and the external input information received from outside includes an acquisition response for the identification information, and determines that the identification information is not included in the external input/output information when the identification information is not included in the external output information or when the acquisition response for the identification information is not included in the external input information, in the external input/output information of the external control interface.

7. The working machine according to claim 1,
wherein the identification information includes at least one of a type, a shape, a weight, a property, a mounted function, an unique number, or information on an update history of a mechanical specification of the working machine or a part constituting the working machine.

8. The working machine according to claim 1, comprising:
a working implement, a swing body, or a traveling body, and
wherein the operational restriction command commands at least one of an operation prohibition of the working implement, the swing body, or the traveling body, or an operating speed restriction thereof.
